(19) Europäisches Patentamt
European Patent Office
Office européen des brevets

(11) **EP 2 637 144 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(51) Int Cl.:
***G07C 5/08*** (2006.01)

(21) Anmeldenummer: **13157742.1**

(22) Anmeldetag: **05.03.2013**

(54) **Verfahren und Anordnung zur Erfassung von Daten für eine Sicherheitsvorrichtung eines Balancefahrzeuges**

Method and assembly for detecting data for a safety device of a balance vehicle

Procédé et agencement destinés à l'enregistrement de données pour un dispositif de sécurité d'un véhicule à deux roues

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2012 DE 102012203462**

(43) Veröffentlichungstag der Anmeldung:
**11.09.2013 Patentblatt 2013/37**

(73) Patentinhaber: **FSD Fahrzeugsystemdaten GmbH 01307 Dresden (DE)**

(72) Erfinder:
• **Staffetius, Tino 01277 Dresden (DE)**

• **Bönninger, Jürgen 01326 Dresden (DE)**

(74) Vertreter: **Kailuweit & Uhlemann Patentanwälte Partnerschaft mbB Bamberger Straße 49 01187 Dresden (DE)**

(56) Entgegenhaltungen:
**EP-A1- 2 821 978        EP-A2- 2 026 287
EP-A2- 2 157 406        DE-A1-102005 059 216
US-A1- 2004 035 630      US-B2- 7 072 753**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Anordnung zur Erfassung von Daten für eine Sicherheitsvorrichtung eines Balancefahrzeuges. Fahrzeugführer von Balancefahrzeugen, wie bspw. Motorräder, Motorroller, Fahrräder etc., sind bei Unfällen einem deutlich höheren Verletzungsrisiko ausgesetzt. Insbesondere bei motorgetriebenen Balancefahrzeugen ist dieses Risiko deutlich größer, da Unfälle gewöhnlich bei hohen Geschwindigkeiten stattfinden.

Es existieren technische Lösungen, um die Fahrer derartiger Fahrzeuge, aber auch von Automobilen oder anderen KFZ, vor, während und nach Unfällen zu schützen. Da Unfälle typischerweise von kritischen Situationen eingeleitet werden, kann eine geeignete technische Lösung diese Situation noch vor dem Fahrer erkennen und Gegenmaßnahmen einleiten.

Schutzvorrichtungen, die während des Unfallverlaufs aktiv werden, bewahren den Fahrer bzw. Beifahrer vor den unmittelbaren Auswirkungen des Unfallgeschehens. Beispiel hierfür sind Airbags. Bei diesen Schutzmaßnahmen erfassen Schutzvorrichtungen den aktuellen Fahrzeugzustand über einen oder mehrere Sensoren und werden in der Regel beim Überschreiten von Grenzwerten aktiv.

Mit den Sensoren wurden dabei bislang und vor allem bei PKW Parameter wie die Gierrate und/oder der Gierwinkel, die Nickrate und/oder der Nickwinkel, die Wankrate und/oder der Wankwinkel, die Fahrzeuggeschwindigkeit, die Fahrzeugbeschleunigung und/oder die Winkelstellung des Lenkrades erfasst. Aufbauend auf diesen Daten kann die Bestimmung der Grenzwerte, deren Überschreiten zum Auslösen von Schutzvorrichtungen führt, auf verschiedenen Wegen erfolgen.

Gemäß der DE 10 2008 047 727 A1 werden grenzwertige Fahrzeugeigenschaften unter der Annahme bestimmt, dass es in einem definierten Zeitintervall und unabhängig vom jeweiligen Fahrer zu einer bestimmten Anzahl von kritischen Situationen, also zu Überschreitungen von Grenzwerten, kommen wird. Demnach werden, in Abhängigkeit der gemessenen Ist-Werte von ausgewählten Fahrzeugdaten, Grenzwerte in der Art einer Toleranzschwelle so eingestellt, dass innerhalb eines bestimmten Zeitintervalls die statistisch zu erwartende Anzahl an Grenzwertüberschreitungen eintritt. Somit werden die Grenzwerte bei einem routinierten Fahrer in der Regel höher eingestellt werden können, als bei einem Fahranfänger, was im Wesentlichen einer Anpassung der Schutzvorrichtungen an verschiedene Fahrer entspricht. Die dieser Auswertung zu Grunde liegende, statistisch zu erwartende Anzahl der Grenzwertüberschreitungen, kann sich hinsichtlich unterschiedlicher Fahrzeugparameter unterscheiden und muss vorab definiert werden.

In der WO 2008/046744 A1 wird ebenfalls ein Verfahren zur fahrerspezifischen Einstellung von fahrdynamischen Werten, insbesondere von Grenzwerten beschrieben. Dabei erfolgt die Einstellung dieser Werte jedoch in einer externen Testumgebung, z. B. einem Fahrsimulator, in dem der Fahrer verschiedene Fahrsituationen absolvieren muss, und nicht im laufenden Betrieb des Fahrzeugs. Während der Simulation werden insbesondere Querdynamik-Grenzwerte, z. B. für die Gierrate, die Querbeschleunigung und/oder den Schwimmwinkel des Fahrzeugs bestimmt. Diese werden in einem Regel- bzw. Steuergerät abgespeichert und nachfolgend zur Einstellung eines ESP-Systems im Fahrzeug verwendet. Für den Fall, dass verschiedene Fahrer gemeinsam ein Fahrzeug nutzen, können dementsprechend verschiedene Fahrerprofile auf dem Regel- bzw. Steuergerät abgespeichert werden. Die Auswahl des jeweiligen Fahrerprofils kann dabei manuell durch den Fahrer selbst oder automatisch anhand eines Vergleichs von gespeicherten und aktuell im Fahrzeug gemessenen Daten erfolgen.

Die EP 2 821 978 A1 offenbart ein komplexes Fahrtzustandsanalysesystem. Dabei werden neben Fahrzeugdaten auch Daten über die Fähigkeiten des Fahrers und Umgebungsdaten erfasst und ausgewertet. Potentiell kritische Situationen werden an den Fahrer gemeldet. Das System soll für Autos, aber auch für Motorräder geeignet sein. Ein Teil der Sensoren ist dabei im Helm des Fahrers untergebracht.

Die US 7 072 753 B2 beschreibt ein Gefahrenabwehrsystem für Fahrzeuge. Es erfasst neben Fahrer- und Fahrzeugdaten auch Fahrtzustands- und Umgebungsdaten. Insbesondere soll ein Fahrererkennungssystem zum Einsatz kommen. Die Fahrerposition soll dabei eine der genutzten Informationen sein. Die Informationen werden in einem Kontrollsystem zusammengeführt und die Kontrollstrategie an den Fahrer und dessen Verhalten angepasst.

Die US 2004/035630 A1 beschreibt ein Fahrererkennungssystem. Dabei wird im Wesentlichen auf Informationen, die Masse und Position des Fahrers bzw. der Fahrer beschreiben, zurückgegriffen. Die gesammelten Informationen sollen zur Steuerung des ABS-Systems oder eines Crasherkennungssystems dienen. Die Auslösung eines Airbags soll veranlasst werden können.

Die EP 2 026 287 A2 offenbart einen Fahrtenschreiber für ein Balancefahrzeug. Dabei werden während der Fahrt eine Vielzahl von Daten des Fahrzeugs erfasst. Diese werden zyklisch überschrieben. Beim Erkennen des Sturzes des Balancefahrzeugs sollen die Daten aufbewahrt und nicht weiter überschrieben werden. Die permanente Datenaufzeichnung kann auch vom Fahrer ausgelöst werden.

Andere, in Fahrzeugen eingesetzte Sensoren dienen dazu, die Fahrzeugelektronik mit Hilfsinformationen zu versorgen, ohne selbst kritische Größen zu überwachen. Derartige Sensoren sind z. B. Platzbelegungs- oder Massesensoren, die Informationen darüber liefern, wie viele Personen das Fahrzeug benutzen und welche Masse sie aufweisen. Die US 2004/0035630 A1 sieht hierfür eine zweiteilige Matte für die Sitzbänke von Motorrädern vor. Jedes Teil der Matte weist dabei Drucksensoren auf, die angeben sollen, ob der Soziussitz besetzt ist und welche Masse der oder die Fahrgäste aufweisen. Die gesammelten Informationen werden dann zur Steuerung des ABS weiterverwendet.

Den meisten, aus dem Stand der Technik bekannten Lösungen zur intelligenten Datenerfassung für die Konfiguration bzw. das Auslösen von Sicherheitsvorrichtungen ist gemein, dass sie für Automobile bzw. drei- oder mehrrädrige Kraftfahrzeuge (im Folgenden: Automobile) ausgelegt sind. Daher sind sie in der Regel nicht auf Balancefahrzeuge übertragbar.

Eine Lösung zur Datenerfassung, speziell für Balanceräder, ist in der DE 10 2005 028 995 A2 in Form eines Verfahrens zur Fahrdynamikregelung und eines Fahrdynamikreglers für motorisierte Einspurfahrzeuge offenbart. Die Grundlage des Verfahrens bildet dabei die Erfassung von Bildsequenzen mittels einer oder mehrer, auf dem Fahrzeug angebrachter Kameras. Aus diesen Sequenzen kann die Lage des Einspurfahrzeugs im Raum und daraus die Tendenz zum Abheben von dessen Vorder- oder Hinterrad ermittelt werden. Ist eine solche Gefahrensituation zu befürchten, wird der Bremsdruck der Vorder- bzw. Hinterradbremse verändert, um so dem Abheben des Vorder- bzw. Hinterrades entgegen zu wirken. Anhand der Bildsequenzen soll auch in Kurvenfahrten ermittelt werden können, inwieweit eine kritische Situation vorliegt. In Abhängigkeit der "Kritikalität" der Kurvenfahrt, erfolgt dann gegebenenfalls eine Ansteuerung der Bremsen oder der ABS-Regelungstechnik, um einen Haftungsverlust der Reifen zu vermeiden. Die erfassten Daten können zudem zur Regelung anderer Fahrzeugsicherheitssysteme, wie ABS oder Personenairbags, dienen.

Neben einfach erfassbaren, an die Eingabemittel eines Balancerades abgegebenen Steuersignalen (Eingabegrößen), bspw. der Betätigung des Gaszugs oder der Bremsen, existieren bei Balanceräderm eine Vielzahl weiterer und andersartiger Steuersignale des Fahrers, die sich, ebenso wie die jeweiligen Reaktionen des Fahrzeugs, grundlegend von denen der Automobile unterscheiden. Dies liegt vor allem daran, dass der Fahrer seinen gesamten Körper in den Steuerprozess des Balancefahrzeuges, insbesondere durch Gewichtsverlagerungen, mit einbezieht. Die dabei anfallenden Daten sind weitaus komplexer und schwieriger erfassbar, als es die Eingabegrößen, wie bspw. der Einschlagwinkel eines Lenkrades oder das Betätigungsniveau des Gaszuges, sind. Inwieweit das Balancerad der Gewichtsverlagerung des Fahrers folgt bzw. damit tatsächlich das gewünschte Fahrverhalten erzielt wird, ist im Vergleich zu Automobilen ebenfalls nur schwierig zu erfassen.

Die Aufgabe der vorliegenden Erfindung ist es, die Nachteile des Standes der Technik zu überwinden und ein Verfahren sowie eine Anordnung zur Erfassung von Daten für eine Sicherheitsvorrichtung eines Balancefahrzeuges vorzuschlagen. Die erfassten Daten sollen dabei zur Verwendung in einer Sicherheitsvorrichtung eines Balancefahrzeuges geeignet sein und bevorzugt der Auslösung einer Schutzvorrichtung oder zur Bereitstellung von Hilfsinformationen für andere Fahrzeugsysteme dienen.

Erfindungsgemäß wird diese Aufgabe gelöst durch ein Verfahren gemäß Anspruch 1. Bevorzugte Weiterbildungen sind Gegenstand der rückbezogenen Unteransprüche.

Steuersignale im Sinne dieser Anmeldung sind alle vom Fahrer an ein Balancerad abgegebene mechanische Impulse, die einen Einfluss auf das Fahrverhalten des Balancerades haben.

Fahrerspezifische Daten im Sinne dieser Anmeldung sind mittels Sensoren erfassbare physikalische Größen bzw. Eigenschaften oder Steuersignale des Fahrers, die einen Einfluss auf das Fahrverhalten des Balancerades haben.

Fahrzeugspezifische Daten im Sinne dieser Anmeldung sind alle physikalischen, mit Sensoren erfassbaren Eigenschaften die den Bewegungszustand des Balancerades im Raum oder den Raum selbst kennzeichnen.

Fahrerspezifische Größe und fahrzeugspezifische Größen im Sinne dieser Anmeldung sind durch Signalaufbereitung, bspw. High- oder Low-Pass-Filter, oder auf mathematischem Wege aus den Daten ermittelte Werte.

Eingabegrößen im Sinne dieser Anmeldung sind an die Eingabemittel des Balancerades, wie bspw. Gas- oder Bremshebel, abgegebene Steuersignale des Fahrers.

Steuersignale im Sinne dieser Anmeldung werden also entweder in Form von Eingabegrößen oder in Form von fahrerspezifischen Daten bzw. fahrerspezifischen Größe an das Balancerad abgegeben werden.

Fahrsituationen im Sinne dieser Anmeldung sind konkrete, vorab definierte Bewegungszustände des Balancerades im Raum zu einem bestimmten Zeitpunkt, in die sich die Fahrt eines Balancerades in der Regel zerteilen lässt, wie bspw. beschleunigte Geradeausfahrten, Kurvenfahrten, Spurwechsel und verzögerte Geradeausfahrten.

Erkennungsparameter im Sinne dieser Anmeldung sind jeweils die fahrzeugspezifischen Größen (Angaben über den Ist-Zustand des Balancerades im Raum), die zur Identifizierung einer bestimmten Fahrsituation ausreichend sind.

Bewertungsparameter im Sinne dieser Anmeldung sind jeweils die fahrerspezifischen Größen, fahrzeugspezifischen Größen und Eingabegrößen, die zur Bewertung und Charakterisierung einer bestimmten Fahrsituation ausreichend sind. Anhand der Bewertungsparameter ist insbesondere eine Einschätzung möglich, inwieweit in einer bestimmten Fahrsituation eine kritische Situation für den Fahrer vorliegt.

Fahrstil im Sinne dieser Anmeldung ist die Gesamtheit der von diesem in einer bestimmten Fahrsituation produzierten Steuersignale (fahrerspezifischen Daten bzw. Größen sowie Eingabegrößen).

Fahrertypen im Sinne dieser Anmeldung sind vorab definierte Kategorien von Fahrern, für die in einer bestimmten Fahrsituation verschiedene Wertebereiche der Bewertungsparameter eine kritische Situation kennzeichnen. Für verschiedene Fahrertypen liegen somit verschiedene Verteilungen der in einer bestimmten und unkritischen Fahrsituation zu erwartenden Bewertungsparameter mit verschiedenen Erwartungswerten und Varianzen vor.

Kritikalität im Sinne dieser Anmeldung ist die Eigenschaft einer bestimmten Fahrsituation, von einem bestimmten Fahrer mit hoher Wahrscheinlichkeit nicht gemeistert zu werden. Kritische Situation gehen somit häufig einem Unfall, gegebenenfalls also auch Personen- oder Fahrzeugschaden, voraus.

Sicherheitsvorrichtungen im Sinne dieser Anmeldung sind Vorrichtungen zur aktiven Einflussnahme auf fahrzeugspezifische Daten, wie bspw. Bremsdruck und Raddrehzahl, oder Vorrichtungen zum Auslösen von passiven Sicherheitssystemen, wie bspw. Airbags.

Bei dem erfindungsgemäßen Verfahren werden mittels mindestens zweier Sensoren $S_1^i$ bis $S_n^i$ fahrerspezifische Daten erfasst und an eine Datenspeicher- und Steuereinrichtung übermittelt. Erfindungsgemäß sind fahrerspezifische Daten solche, die ein Steuersignal des Fahrers charakterisieren, die einen Einfluss auf das Fahrverhalten des Balancerades haben. Erfindungsgemäß sind derartige Steuersignale solche, die nicht an die Eingabemittel des Balancerades abgegeben werden, wie bspw. Gewichtsverlagerungen und vom Fahrer gezielt auf die Seite oder die Fußrasten des Balancerades applizierte Drücke.

Bei den Sensoren handelt es sich bevorzugt um Drucksensoren und/oder optische Sensoren und/oder Kraftsensoren und/oder Sensoren zur Erfassung der Herzfrequenz oder anderer physiologischer Stressindikatoren des Fahrers. Nicht zu den fahrerspezifischen Daten im Sinne der vorliegenden Erfindung zählen die Eingabegrößen, also Daten die an den Eingabe- bzw. Steuermitteln eines Balancerades erfasst werden können. Zu diesen Daten, die beim Betrieb eines jeden Balancerades mechanisch oder elektronisch erfasst werden, zählen bspw. die Niveaus beim Betätigen von Gaszug oder Bremsen.

Beim erfindungsgemäßen Verfahren werden mittels mindestens eines weiteren Sensors $S_1^j$ bis $S_n^j$ fahrzeugspezifische Daten erfasst und ebenfalls an die Datenspeicher- und Steuereinrichtung übermittelt. Fahrzeugspezifische Daten sind dabei solche, die Eigenschaften des Balancefahrzeuges, die einen Einfluss auf das Fahrverhalten desselben haben, oder das Fahrverhalten des Balancerades selbst charakterisieren.

Die Datenspeichereinrichtung speichert alle Daten kontinuierlich, zyklisch oder periodisch für einen bestimmten Zeitraum, entweder in Form eines Dauer- oder eines Ringspeichers, wobei bei letzterem die Daten periodisch durch neue Daten überschrieben werden. Die Steuereinrichtung ermittelt anschließend aus diesen Daten statische und/oder dynamische fahrer- und fahrzeugspezifische Größen und speichert diese bei Bedarf. Auch die bei der Betätigung der Eingabemittel abgegebenen und erfassten Steuersignale werden von der Steuereinrichtung bevorzugt gespeichert.

Im Sinne der Erfindung werden dabei unter statischen Größen solche verstanden, die sich während der Benutzung eines Balancerades unter normalen Umständen und innerhalb eines bestimmten Toleranzbereiches nicht ändern. Dies trifft seitens der fahrerspezifischen Größen insbesondere auf das Gewicht des Fahrers und dessen Verteilung auf der Sitzbank beim Stillstand des Balancerades zu. Bei der bevorzugten Verwendung von optischen Sensoren kann ebenfalls die Sitzhöhe des Fahrers beim Stillstand des Balancerades als eine statische Größe ermittelt werden. Bei den fahrzeugspezifischen Größen zählt bspw. der Reifendruck als eine statische Größe.

Unter dynamischen Größen werden im Sinne der Erfindung solche verstanden, die während der Fahrt eines Balancerades unter normalen Umständen Veränderungen unterliegen, wobei diese Veränderungen für das Fahrverhalten des Balancerades von Bedeutung sind. Seitens der fahrerspezifischen Größen handelt es sich dabei insbesondere um die Gewichtsverteilung, die Bewegung und die Schwerpunktlage des Fahrers. Bei den fahrzeugspezifischen Größen handelt es sich bspw. um Werte wie die Geschwindigkeit, die Beschleunigung und den Rollwinkel des Balancerades. Bei der bevorzugten Verwendung von optischen Sensoren können ebenfalls die Veränderungen von Position und Haltung des Fahrers auf dem Balancerad bestimmt werden.

Der Übergang von den erfassten Daten zu den bestimmten Größen erfolgt zunächst durch eine Aufbereitung der gemessenen Daten, bspw. durch Subtraktion des Hintergrundes oder Rauschens, durch Aussortieren offensichtlicher Fehlmessungen oder durch das Anwenden von Filtern, bspw. High- oder Low-Pass-Filtern. Zur Ermittlung der fahrer- und der fahrzeugspezifischen Größen aus den erfassten Daten werden weiterhin statistische oder andere numerische Verfahren angewandt. Aus den erfassten Daten einer Sensorverteilung kann so bspw. ein Scharmittel, also das Mittel einer Vielzahl zur selben Zeit bestimmten Sensordaten, bestimmt werden, um so den durchschnittlich auf einen bestimmten Bereich der Sitzbank ausgeübten Druck zu ermitteln. Weiterhin kann aus den zu verschiedenen Zeiten von einem Sensor erfassten Daten ein Zeitmittel, also das Mittel durch einen Sensor über einen gewissen Zeitraum erfassten Daten, gebildet werden, um so den während einer bestimmten Zeit durchschnittlich auf die Sitzbank ausgeübten Druck zu ermitteln. Die Zeitverläufe gemessener Daten können weiterhin genutzt werden, um andere Größen daraus abzuleiten, wie bspw. die Geschwindigkeit und Beschleunigung des Balancerades aus Daten zur Raddrehzahl.

Weiterhin bevorzugt werden die gemessenen Daten zeitlich extrapoliert. So werden aus den erfassten Daten Größen ermittelt, die einer weiteren Auswertung zu Grunde gelegt werden.

Die Erfassung der fahrer- und fahrzeugspezifischen Daten erfolgt bevorzugt in einem beliebig einstellbaren, regelmäßig wiederholten Messintervall. Aus diesen Daten kann der Verlauf der fahrer- als auch fahrzeugspezifischen Größen, insbesondere der dynamischen Größen, bestimmt werden. Um eine Korrelation dieser Größen zu ermöglichen, erfolgt die Messung von fahrer- als auch fahrzeugspezifischen Daten bevorzugt gleichzeitig oder kurz aufeinander folgend. In der Regel wird die Erfassung der Daten mit hohen Taktfrequenzen, bspw. 100Hz erfolgen. Für die weitere Verarbeitung erfolgt in einem ersten Schritt zur Bestimmung der fahrer- und fahrzeugspezifischen Größen die Reduktion der Daten in der Zeit- und/oder Frequenzdomäne. Gerade für eine weitere Verwendung der Daten in einem späteren diskreten, numerischen Verfahren müssen dabei hinsichtlich des Zeitschritts Stabilitätskriterien eingehalten werden.

Die statischen fahrerspezifischen Größen sind für die Korrelation mit den fahrzeugspezifischen Größen von untergeordneter Bedeutung. Sie dienen vor allem als Referenzwerte, die eine qualitative Bewertung der gemessenen dynamischen fahrerspezifischen Größen erst ermöglichen. Um die Wirkung von Änderungen der Gewichtsverteilung oder der Schwerpunktlage des Fahrers auf das Fahrverhalten des Balancerades mit den gemessenen fahrzeugspezifischen Daten in Beziehung setzen zu können, ist es wesentlich, die Gewichtsverteilung oder Schwerpunktlage des Fahrers im Stillstand des Balancerades zu kennen. Die statischen fahrerspezifischen Größen werden daher regelmäßig aus Daten ermittelt, die zu einem Zeitpunkt erfasst wurden, an dem die fahrzeugspezifischen Daten einen Stillstand des Fahrzeuges indizierten.

Die dynamischen fahrerspezifischen Größen charakterisieren hingegen den Fahrstil des Fahrers als die von ihm abgegebenen Steuersignale, da sie u.a. den zeitlichen Verlauf von dessen Gewichtsverteilung, Position, Bewegung und Schwerpunktlage darstellen. Diese Größen sind als die vom Fahrer abgegebenen Steuersignale für die Steuerung eines Balancefahrzeugs von besonderer Bedeutung, da sie die Bewegung des Fahrers auf dem Balancerad charakterisieren. Allein das Vorliegen einer bestimmten Druckverteilung des Fahrers auf der Sitzbank ist in der Regel schon ausreichend, um sicher auf ein bestimmtes Steuersignal des Fahrers bzw. ein bestimmtes, von diesem geplantes Fahrmanöver zu schließen. So ist bspw. das Initiieren einer Rechts- bzw. Linkskurve oder eines Spurwechsels bei einem Balancerad mit einer charakteristischen Abfolge der Druckverteilung auf der Sitzbank, den Fußrasten und/oder den Seiten des Fahrzeugs verbunden. Auf ebenso charakteristische Weise ändern sich die Schwerpunktverteilung sowie die Position des Fahrers. Werden darüber hinaus zusätzlich optische Sensoren verwendet, können weitere Rückschlüsse auf Steuersignale auf das Balancerad aus der Haltung des Fahrers gezogen werden. Durch die Ermittlung der dynamischen fahrerspezifischen Größen kann so mit hoher Sicherheit auf die vom Fahrer ausgeübten Steuerimpulse zur Einflussnahme auf das Fahrverhalten des Balancerades geschlossen werden.

Die dynamischen fahrzeugspezifischen Größen charakterisieren zur gleichen Zeit den Ist-Zustand des Balancerades im Raum als die tatsächlich erfolgte Reaktion auf die Steuersignale des Fahrers und charakterisieren somit eine bestimmte Fahrsituation des Balancerades. So ist bspw. eine Geschwindigkeitserhöhung bei einer Kurvenfahrt mit gleichbleibendem Radius bei einem Balancerad zwangsläufig mit einem ebenfalls größeren Rollwinkel, der vom Fahrer entweder über eine Änderung des Lenkwinkels (Eingabegröße) oder eine Gewichtsverlagerung (fahrerspezifische Größe) erreicht werden kann, verbunden. Die Kurvenfahrt selbst lässt sich regelmäßig über zwei, in kurzer Zeit aufeinanderfolgende, entgegengesetzte Änderungen des Rollwinkels mit einem dazwischen befindlichen Plateau oder am entsprechenden Verlauf der Rollrate erkennen. Um die Genauigkeit der Fahrsituationserkennung zu erhöhen, können weitere Größen, bspw. die Gierrate oder der Gierwinkel herangezogen werden. Aus der Zusammenschau eines Teils vorab definierter fahrzeugspezifischer Größen, den Erkennungsparametern, ergibt sich somit ein identifizierbares Muster für eine Kurvenfahrt, gleiches gilt für andere Fahrsituationen. Erfindungsgemäß erfolgt somit eine sichere Erkennung von Fahrsituationen, bspw. Kurvenfahrt, Spurwechsel, Ausweichen oder Überholen, jeweils nach links oder rechts, vorteilhaft anhand fahrzeugspezifischer Erkennungsparameter, die nur einen Teil der erfassten fahrzeugspezifischen Daten bzw. der ermittelten fahrzeugspezifischen Größen ausmachen.

Ist eine solche Fahrsituation identifiziert, kann sie vorteilhaft anhand vorab definierter Bewertungsparameter, ausgewählt aus fahrzeugspezifischen und/oder fahrerspezifischen Größen und/oder Eingabegrößen, charakterisiert und auf das Vorliegen einer kritischen Situation geprüft werden. Von besonderer Bedeutung für die Charakterisierung der Fahrsituation sind dabei fahrzeugspezifische Größen, wie die Geschwindigkeit, die Beschleunigung, der Lenkwinkel, das Lenkmoment, der Rollwinkel und der durch Integration der Gierrate über kurze Zeiträume berechnete Gierwinkel, da allein mit diesen die Charakterisierung eines Großteils von typischen Fahrsituationen eines Balancerades möglich ist. Somit kann mittels der Identifizierung von definierten Fahrsituationen anhand von dynamischen fahrzeugspezifischen Größen beim erfindungsgemäßen Verfahren die Größe der zur Charakterisierung einer Situation auszuwertenden Datenbasis vorteilhaft minimiert werden. Dies spart vorteilhaft Rechenleistung und Speicherressourcen und trägt somit zur Beschleunigung des erfindungsgemäßen Verfahrens bei.

Anhand der Bewertungsparameter für eine bestimmte Fahrsituation kann vorteilhaft eine vorläufige oder endgültige Charakterisierung dieser Situation erfolgen und so bspw. erkannt werden, ob es sich um eine kritische Situation handelt. Dabei wird zunächst geprüft, ob die erkannte Fahrsituation, bspw. eine beschleunigte oder verzögerte Geradeausfahrt, eine direkte Reaktion auf Eingabegrößen des Fahrers, bspw. das Betätigen des Gasgriffes oder der Bremse, darstellt. Eine solche Deckung von Eingabegrößen und Fahrsituation bestünde bspw. auch, wenn gleichzeitig ein erhöhter Rollwinkel, eine erhöhte Gierrate sowie ein bestimmter Lenkeinschlag des Fahrers festgestellt werden. Ist dies der Fall, erfolgt eine Charakterisierung der Fahrsituation unter Einbeziehung von weiteren, aus fahrer- und fahrzeugspezifischen Größen sowie Eingabegrößen ausgewählten, Bewertungsparametern. Kann ein Zusammenhang zwischen der Fahrsituation und den Eingabegrößen des Fahrers nicht festgestellt werden, bspw. bei der Erkennung einer verzögerten Geradeausfahrt durch drastische Verringerung der Raddrehzahl, wobei der Fahrer bei eingelegtem Gang weder die Bremsen betätigt noch die Gasgriffstellung verändert hat, kann bereits nach dieser Auswertung der Eingabegrößen mit hoher Wahrscheinlichkeit auf eine kritische Situation geschlossen werden.

Liegt eine Fahrsituation vor, die sich als Reaktion des Fahrzeugs auf vom Fahrer abgegebene Eingabegrößen darstellt, erfolgt im nächsten Schritt eine Bewertung anhand des Fahrstils des Fahrers. Dabei werden bevorzugt die aktuell und die in der Vergangenheit für einen Fahrer in einer definierten Situation bestimmten Steuersignale verglichen. Die Steuersignale sind für die Charakterisierung des Fahrstils eines Fahrers in einer, durch bestimmte Bewertungsparameter beschreibbaren, Fahrsituation hinreichend. Somit kann anhand des Vergleichs der Steuersignale die Abweichung des aktuellen vom typischen Fahrstil des Fahrers in dieser Fahrsituation bestimmt werden. Da die Fahrsituation über die Bewertungsparameter bestimmt wird, werden so Kombinationen von fahrer- und fahrzeugspezifischen sowie Eingabegrößen miteinander verglichen. Je nach dem Grad der Abweichung des aktuell bestimmten Fahrstils von dem in der Vergangenheit für diesen Fahrer erfassten Fahrstil kann vorteilhaft auf das Vorliegen einer kritischen Situation geschlossen werden.

Weiterhin bevorzugt erfolgt eine Bestimmung des Fahrertyps des Fahrers anhand der in einer bestimmten Fahrsituation bestimmten Bewertungsparameter. Anhand des Fahrertyps kann vorteilhaft eine Charakterisierung der Fahrsituation erfolgen und insbesondere bestimmt werden, ob eine kritische Situation vorliegt. Dazu werden aktuell bestimmte fahrsituationsbezogene Bewertungsparameter bevorzugt in verschiedene, vorab definierte Bereiche einsortiert. Diese Wertebereiche entsprechen dabei den für verschiedene Fahrertypen unterschiedlichen fahrerischen Könnens zu erwartenden Werten der Bewertungsparameter. Somit liegen für verschiedene Fahrertypen verschiedene Verteilungen mit verschiedenen Erwartungswerten und Varianzen vor. So wird ein erfahrener Fahrer in einer Kurvensituation und bei einer bestimmten Geschwindigkeit einen größeren Rollwinkel kontrollieren können, als ein unerfahrener Fahrer. Die Bestimmung des Fahrertyps durch Kategorisierung der erfassten Bewertungsparameter in vorab definierte Bereiche erlaubt vorteilhaft eine Charakterisierung, inwieweit eine kritische Fahrsituation vorliegt. So können den verschiedenen Fahrertypen bspw. verschiedene Grenzwerte zugeordnet werden, die für den jeweiligen Fahrertyp nicht überschritten werden dürfen. Insbesondere können in Abhängigkeit des Fahrertyps auch die zugelassenen Abweichungen des aktuellen vom typischen Fahrstil eines Fahrers variieren. In der Regel kann ein versierterer Fahrer mit unbekannten bzw. ungewohnten Situationen besser umgehen, als ein unerfahrener Fahrer. Somit erlaubt der Fahrertyp eine genauere Bewertung der Abweichung des aktuellen vom typischen Fahrstil eines Fahrers und damit der Kritikalität einer Fahrsituation.

In einer bevorzugten Ausführungsform des erfindungsgemäßen Verfahrens werden der Fahrertyp und der Fahrstil eines Fahrers in einer bestimmten Fahrsituation anhand von fahrerspezifischen Größen bestimmt. Dabei erfolgt hinsichtlich der mittels Drucksensoren und/oder optischen Sensoren und/oder Kraftsensoren und/oder Sensoren zur Erfassung der Herzfrequenz oder anderer physiologischer Stressindikatoren erfassten fahrerspezifischen Daten bzw. den daraus ermittelten fahrerspezifischen Größen vorteilhaft eine Reduktion der Datenbasis, da für definierte Fahrsituationen jeweils nur eine Teilmenge dieser Größen zur Charakterisierung der Situation benötigt wird. Besonders bevorzugt werden die fahrerspezifischen Größen zur Bestimmung des Fahrertyps in verschiedene, vorab definierte Wertebereichen eingeordnet und zum Abgleich des Fahrstils die Abweichung aktuell und in der Vergangenheit für diesen Fahrer ermittelten Werten verglichen.

Besonders bevorzugt erfolgt eine Charakterisierung des Fahrertyps anhand des Vergleiches der in einer bestimmten Fahrsituation gemessenen Gewichtsverteilung mit für diese Fahrsituation vorab definierten Gewichtsverteilungsmustern und eine Charakterisierung des Fahrstils des Fahrers durch einen Vergleich der aktuellen mit in der Vergangenheit für diesen Fahrer ermittelten Gewichtsverteilungen bzw. Gewichtsverteilungsmustern. Bei den Gewichtsverteilungsmustern handelt es sich dabei um auf wesentliche Merkmale, wie bspw. Maxima oder Minima der Verteilung, reduzierte Gewichtsverteilungen, die typischerweise bei bestimmten Fahrsituationen auftreten. Weist die tatsächlich beim Fahrer gemessene Gewichtsverteilung diese wesentlichen Merkmale auf, kann mit hoher Sicherheit auf das Vorliegen der jeweiligen Fahrsituation geschlossen werden.

Bei der Fahrsituation "Kurvenfahrt" kann bspw. zwischen drei verschiedenen Fahrstilen unterschieden werden, denen eindeutig Gewichtsverteilungsmuster mit bestimmten Merkmalen zuordenbar sind. Bei den drei Fahrstilen der Kurvenfahrt handelt es sich hierbei um das sogenannte "Legen", "Drücken" und "Hanging-off". Jeder dieser Stile kann durch ein typisches Gewichtsverteilungsmuster charakterisiert werden.

Die während einer definierten Fahrsituation gemessenen Gewichtsverteilungen werden bevorzugt mit den für diese Situation vorliegenden Gewichtsverteilungsmustern verglichen und jeweils einem dieser Muster zugeordnet. Somit ergibt sich eine Verteilung, wie oft der Fahrer während einer bestimmten Fahrsituation jeweils eine der für diese Situation typischen Gewichtsverteilungsmuster bzw. Fahrstile aufgewiesen hat. Für die Kurvenfahrt kann bspw. ermittelt werden, wie lange der Fahrer während der Kurvenfahrt den Fahrstil "Legen", "Drücken" oder "Hanging-off" innehatte. Anhand dieser Verteilung erfolgt anschließend eine Charakterisierung des Fahrertyps.

Bei der Charakterisierung des Fahrertyps anhand der Häufigkeitsverteilung bestimmter Fahrstile während einer Kurvenfahrt kann entweder aus der reinen Häufigkeit der einzelnen Stile oder aus deren Kombination bzw. Abfolge auf den Fahrertyp geschlossen werden. In der Fahrsituation "Kurvenfahrt" bspw. lässt der Fahrstil "Legen" auf einen Fahranfänger, der Stil "Drücken" auf einen geübten und der Stil "Hanging-off" auf einen versierten Fahrer schließen. Anhand des Vorliegens der einzelnen Stile während der Kurvenfahrt kann somit direkt auf den Fahrertyp geschlossen werden. In Abhängigkeit von der Dauer des Auftretens der Fahrstile während der Kurvenfahrt kann auch auf Mischformen von Fahrertypen geschlossen werden. Dies kann bspw. durch einen Scorewert erreicht werden, mit dem das Fahrvermögen eines Fahrers charakterisiert wird. Dieser Scorewert kann bspw. anhand der Häufigkeitsverteilung der einzelnen Stile während der Fahrsituation bestimmt werden.

Durch die Korrelation von fahrzeug- und fahrerspezifischen Größen ergibt sich somit für ein Balancerad erstmals die Möglichkeit einer verbesserten Charakterisierung des Fahrertyps und dessen typischen Fahrstils in einer bestimmten Fahrsituation. Verschiedene Fahrertypen sind dabei durch ein unterschiedliches fahrerisches Können sowie ein unterschiedliches Vermögen auf kritische Situationen zu reagieren gekennzeichnet. Als Fahrstil wird das konkrete Fahrverhalten eines Fahrers bezeichnet, das sich in der Gesamtheit der von diesem in einer bestimmten Fahrsituation produzierten Steuersignale (fahrerspezifischen Daten bzw. Größen sowie Eingabegrößen) äußert.

Durch die Nutzung von fahrer- und fahrzeugspezifischen Bewertungsparametern unter Einbeziehung der Eingabegrößen kann insbesondere ermittelt werden, welche Input-Signale in Form von Gewichts-, Schwerpunkts- oder Positionsverlagerungen des Fahrers regelmäßig welche Fahrsituationen herbeiführen, welche fahrerspezifischen Steuersignale der Fahrer im Verlauf einer solchen Fahrsituation regelmäßig abgibt oder mit welchen Input-Signalen der Fahrer regelmäßig auf bestimmte fremddeterminierte Fahrsituationen reagiert. Diese Korrelation der fahrzeug- und fahrerspezifischen Größen kann vorteilhaft für verschiedene Zwecke genutzt werden. Vorteilhaft ist ein Einsatz der so gewonnenen Charakterisierung zu Schulungszwecken, um bspw. einem Fahrschüler von diesem falsch durchgeführte Bewegungsabläufe sowie deren Folgen aufzuzeigen. Die aus den erfindungsgemäß erfassten Daten gewonnene Charakterisierung des typischen Fahrstils eines Fahrers kann weiterhin vorteilhaft zum Erkennen eines Abweichens von diesem Fahrstil genutzt werden.

Die Charakterisierung des Fahrertyps bzw. des typischen Fahrstils eines Fahrers kann ebenfalls bevorzugt auch wie folgt geschehen. Beispielsweise können für verschiedene Fahrsituationen Grenzwerte für fahrzeug- sowie fahrerspezifische Größen und/oder den Bewertungsparametern dieser Situation, ermittelt werden, deren Überschreiten in der jeweiligen Situation das Auslösen einer Sicherheitsvorrichtung oder die Abgabe von Informationen über die Kritikalität an den Fahrer bewirkt. Vorzugsweise hat dabei der für den Fahrer ermittelte Fahrertyp einen Einfluss auf die relevanten Grenzwerte. Beispielsweise kann ermittelt werden, bis zu welchem Rollwinkel ein Fahrer sein Balancerad bei einer bestimmten Geschwindigkeit in einer bestimmten Fahrsituation normalerweise absenkt. Wird der jeweilige, vom Fahrertyp abhängige Wert überschritten, führt dies zur Ausgabe von Informationen über die Kritikalität an den Fahrer und/oder zum Auslösen einer aktiven oder passiven Schutzvorrichtung. Weiterhin bevorzugt, sind die Grenzwerte dahingehend variabel, dass sie von fahrerspezifischen Daten, wie bspw. dem Pulsschlag oder der Druckverteilung auf der Sitzbank abhängen. Entfernen sich diese fahrerspezifischen Werte weit vom typischen Bereich und deuten somit eine Stresssituation des Fahrers an, erfolgt eine Auslösung der Sicherheitsvorrichtung oder eine Warnung des Fahrers bereits vor Erreichen der fahrzeugspezifischen Grenzwerte.

Eine weitere bevorzugte Möglichkeit besteht darin, dass Wertetabellen oder Datenfelder angelegt werden, in denen bestimmte fahrer- und fahrzeugspezifische Größen sowie Eingabegrößen miteinander korreliert werden. Dies entspricht einer Datenbasis, die den typischen Fahrstil eines Fahrers charakterisiert. Dies hat den Vorteil, dass die Korrelation von bestimmten fahrer- und fahrzeugspezifischen Größen nicht auf einen einzigen Wert oder ein einziges Verhältnis reduziert werden müsste, wie bei einem Mittel- oder Grenzwert. Aufgrund der Reduktion der Zahl der zur Erkennung und Bewertung von Fahrsituationen notwendigen Größen auf Erkennungs- bzw. Bewertungsparameter, die lediglich einen Teil der fahrzeugspezifischen Größen bzw. der fahrzeugspezifischen und fahrerspezifischen Größen sowie der Eingabegrößen ausmachen, benötigt eine solche Datenbasis vorteilhaft einen geringen Speicherplatz. Auch das Auslesen und Verwerten der Daten kann so vorteilhaft beschleunigt werden, was die Bewertung von Fahrsituation beschleunigt.

Die erfindungsgemäße Erfassung von fahrer- und fahrzeugspezifischen Daten sowie die bevorzugte Art der Korrelation der daraus bestimmten Größen kann sowohl in einem Simulator als auch während der Nutzung eines Balancerades erfolgen. Mit einem Simulator kann ein Fahrer gezielt und wiederholt in bestimmte definierte Fahrsituationen gebracht werden, die er meistern muss. Dies bietet sich an, wenn die Erfassung der Daten sowie die Ermittlung der korrelierten Größen der Bestimmung von Grenzwerten für eine Sicherheitsvorrichtung für ein Balancerad dienen soll. Diese könnten dabei aufgrund der Reproduzierbarkeit identischer Fahrsituationen mit hoher statistischer Sicherheit ermittelt werden.

Erfolgt die Erfassung der Daten sowie die Korrelation der Größen während der Benutzung eines Balancerades, ist insbesondere das Anlegen von Wertetabellen bzw. einer Datenbasis als Grundlage für eine Sicherheitsvorrichtung für ein Balancerad vorteilhaft. Bei dem Anlegen einer solchen Tabelle bzw. Datenbasis können schließlich äußere Umstände, wie bspw. Straßenverhältnisse oder überhöhte Kurven, Berücksichtigung finden, indem die in diesen Fahrsituationen ermittelten Werte, insbesondere fahrzeugspezifische Größen, in die Tabelle aufgenommen werden. Um die Datenbasis dennoch klein zu halten, werden dabei bevorzugt nur solche Größen aufgenommen, die in einer bestimmten Zeit mit einer gewissen Häufigkeit ermittelt werden. Eine Abweichung des Fahrers von seinem typischen Fahrstil und damit möglicherweise eine kritische Situation, wird dann in der beschriebenen Weise durch die hinreichende Abweichung aktuell erfasster Daten bzw. daraus ermittelter Größen von in der Tabelle gespeicherten und/oder bereits vorab definierten Wertebereichen charakterisiert.

Die Anordnung zur Erfassung von Daten für eine Sicherheitsvorrichtung umfasst dabei mindestens zwei Sensoren $S_1^i$ bis $S_n^i$ zur Erfassung fahrerspezifischer Daten, insbesondere das Gewicht, die Gewichtsverteilung, die Position sowie die Schwerpunktlage des Fahrers. Weiterhin umfasst die Anordnung mindestens einen Sensor $S_1^j$ bis $S_n^j$ zur Erfassung fahrzeugspezifischer Daten, insbesondere der Geschwindigkeit, der Beschleunigung sowie des Rollwinkels des Balancerades. Die mindestens zwei Sensoren fahrerspezifischer sowie der mindestens eine Sensor zur Erfassung fahrzeugspezifischer Daten sind mit einer Datenspeicher- und Steuereinrichtung verbunden, die ebenfalls Bestandteil der erfindungsgemäßen Anordnung ist. Durch diese wird die zeitlich korrelierte Erfassung von fahrer- sowie fahrzeugspezifischen Daten gesteuert sowie die erfassten Daten gespeichert und ausgewertet. Aus diesen Daten werden mittels der Datenspeicher- und Steuereinrichtung statische sowie dynamische fahrer- und fahrzeugspezifische Größen ermittelt. Die Verbindung der in der Anordnung enthaltenen Sensoren kann dabei mittels geeigneter Datenkabel oder kabellos erfolgen.

Bei den Sensoren zur Erfassung der fahrerspezifischen Daten handelt es sich bevorzugt um Drucksensoren und/oder optische Sensoren und/oder Sensoren zur Erfassung der Herzfrequenz oder anderer physiologischer Stressindikatoren, bspw. der Hautleitfähigkeit des Fahrers. Erfindungsgemäß sind mindestens zwei Drucksensoren in die Sitzbank des Balancerades integriert oder auf dieser angebracht. Ebenso erfindungsgemäß ist eine Positionierung von Drucksensoren und/oder Kraftsensoren an den Seiten des Balancerades an den Anpressflächen der Innenschenkel des Fahrers, auf den Fußrasten, an den Handgriffen oder im Auflagebereich des Oberkörpers des Fahrers bei Hochgeschwindigkeitsfahrten.

Weiterhin bevorzugt sind die mindestens zwei Drucksensoren in eine Drucksensormatte integriert, wobei eine Drucksensormatte in der Regel mehrere Hundert, zumindest mehrere Dutzend Drucksensoren aufweist, die bevorzugt rasterförmig in einer flexiblen Fläche angelegt sind. Eine Sensormatte eignet sich besonders für eine Integratbn von Drucksensoren in die Sitzbank eines Balancerades. Diese Sensormatte ist bevorzugt in den Fahrersitz des Balancerades integriert oder auf diesem angebracht. Ebenfalls bevorzugt ist eine Unterteilung der Drucksensormatte in verschiedene Bereiche, wobei diese Unterteilung eine spätere Auswertung der erfassten Daten, bspw. hinsichtlich der Anzahl der Fahrer und/oder der Vorauswahl verschiedener Druckzonen erleichtert.

Werden zur Erfassung der fahrerspezifischen Daten optische Sensoren verwendet, sind diese bevorzugt im Bereich des Lenkers des Balancerades positioniert und entgegen der üblichen Fahrrichtung des Balancerades ausgerichtet. Diese Position erlaubt vorzugsweise eine optische Erfassung der Position und Haltung des Fahrers. In einer weiterhin bevorzugten Ausführungsform kann mit den optischen Sensoren die Lage von Zielmarkern bestimmt werden. Dabei handelt es sich bspw. um Infrarotemitter, die sich in oder an der Bekleidung oder dem Helm des Fahrers befinden. Dies erlaubt vorteilhaft auch bei schlechten optischen Verhältnissen, wie starkem Gegen- oder Streulichtlicht, eine genaue Erfassung der Kontur des Fahrers. Sind sowohl optische Sensoren als auch Drucksensoren in der Anordnung enthalten, korreliert die Datenspeicher- und Steuereinrichtung die Erfassung von fahrerspezifischen Daten durch die optischen Sensoren vorzugsweise mit der Datenerfassung durch die Drucksensoren sowie durch den mindestens einen weiteren Sensor. In einer ebenfalls bevorzugten Ausführungsform der erfindungsgemäßen Anordnung wird eine On-Board-Kamera als optischer Sensor zur Erfassung fahrerspezifischer Daten eingesetzt, die sich bevorzugt im Bereich des Lenkers, bzw. der Steuereinrichtung des Balancerades befindet.

Bei dem mindestens einen Sensor zur Erfassung der fahrzeugspezifischen Daten handelt es sich bevorzugt um Drehzahlmesser, gyroskopische Sensoren, Luftdruckmesser, Drehwinkelsensoren, in Hydraulikzylinder integrierte Positionssensoren, Tachographen, Beschleunigungssensoren, Drehratensensoren und/oder optische Sensoren. Diese Sensoren sind vorzugsweise so am Balancerad montiert, dass eine sichere und störungsfreie Messung der jeweiligen fahrzeugspezifischen Daten gewährleistet ist.

Im Folgenden wird eine bevorzugte Ausführungsform der Erfindung anhand eines Ausführungsbeispiels und von Abbildungen erläutert. Dabei zeigen:

Figur 1: Eine schematische Darstellung des Gewichtsverteilungsmusters für den Fahrstil "Legen" in der Fahrsituation "Rechts -Kurvenfahrt" (Bereiche niedrigen Drucks - horizontal schraffiert; Bereiche mittleren Drucks -vertikal schraffiert; Bereiche hohen Drucks - kreuzförmig schraffiert);

Figur 2: Eine schematische Darstellung des Gewichtsverteilungsmusters für den Fahrstil "Drücken" in der Fahrsituation "Rechts - Kurvenfahrt" und" (Bereiche niedrigen Drucks - horizontal schraffiert; Bereiche mittleren Drucks -vertikal schraffiert; Bereiche hohen Drucks - kreuzförmig schraffiert);

Figur 3: Eine schematische Darstellung des Gewichtsverteilungsmusters für den Fahrstil "Hanging-off" in der Fahrsituation "Rechts - Kurvenfahrt" "(Bereiche niedrigen Drucks - horizontal schraffiert; Bereiche mittleren Drucks -vertikal schraffiert; Bereiche hohen Drucks - kreuzförmig schraffiert);

Figur 4: Ein Blockdiagramm des erfindungsgemäßen Verfahrens.

Der Fahrersitz eines Motorrades des Typs BMW R1200GS wurde mit einer Drucksensormatte der Firma TekScan ausgerüstet, die 32 x 32 matrixartig angeordnete Drucksensoren enthält. Diese Sensormatte wurde vollflächig auf die Oberfläche des Fahrersitzes aufgebracht. Mittels der Drucksensormatte wurde die Gewichtsverteilung des Fahrers auf der Sitzbank während einer 20-minütigen Fahrt über eine Teststrecke erfasst. Diese Daten wurden mit einer Rate von 100 Hz auf einem Datenrekorder gespeichert. Weiterhin war eine auf den Fahrer gerichtete On-Board-Kamera auf dem Motorrad angeordnet, mit der die Position des Fahrers während der Testfahrt mit einer Bildrate von 100 fps erfasst und ebenfalls auf dem Datenrekorder gespeichert wurde. Zusätzlich wurde die Herzfrequenz des Fahrers erfasst und mit einer Rate von 100 Hz abgetastet.

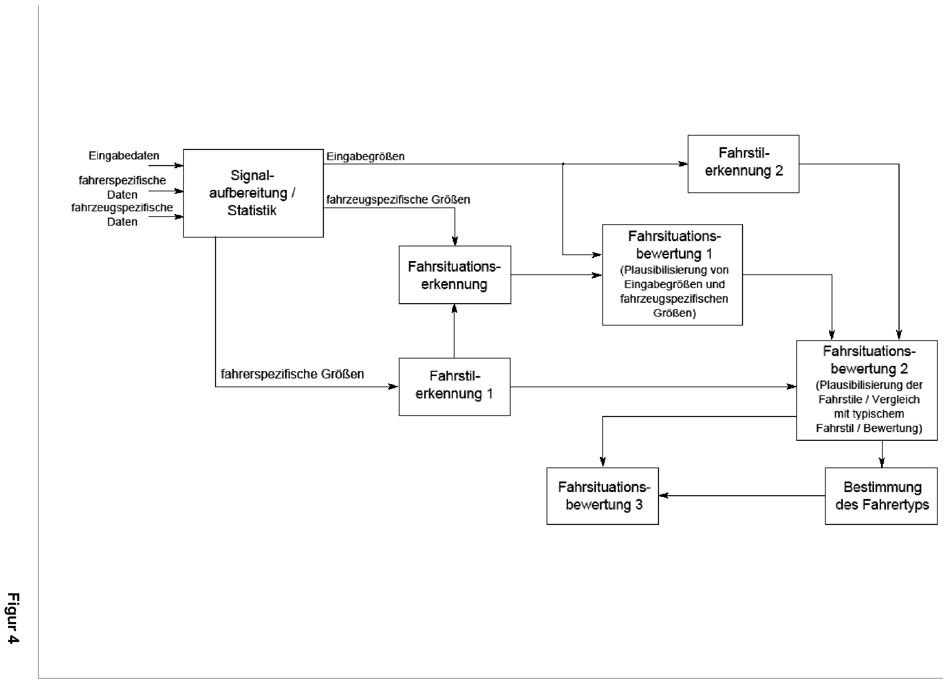

Weiterhin wurden die fahrzeugspezifischen Daten Geschwindigkeit und Beschleunigung des Motorrades während der Fahrt mittels Raddrehzahlsensoren erfasst. Gleichzeitig wurde der Rollwinkel mittels zweier, beidseitig am Motorrad angebrachten Lasersensoren ermittelt. Die fahrzeugspezifischen Daten wurden mit einer Rate von 100 Hz erfasst und auf dem Datenrekorder gespeichert. Ebenso wurden die an den Eingabemitteln abgegebenen Steuersignale, d.h. die Eingabegrößen, wie die Stellung des Gasgriffs, die Betätigung der Bremsen und der Kupplung sowie die Gangwahl, mit einer Rate von 100 Hz erfasst. Es wurden somit, wie in Fig.4 abgebildet, zunächst fahrer- und fahrzeugspezifische Daten sowie Eingabegrößen erfasst und diese Signale anschließend aufbereitet bzw. statistisch zu fahrer- und fahrzeugspezifischen Größen ausgewertet.

Die zeitsynchron erfassten fahrer- und fahrzeugspezifischen Daten sowie die Eingabegrößen wurden anschließend korreliert und hinsichtlich drei verschiedener Fahrsituationen, nämlich "Kurvenfahrt", "konstante Geradeausfahrt" und "beschleunigte Geradeausfahrt" ausgewertet, wobei im Folgenden nur auf die Auswertung der Fahrsituationen "Kurvenfahrt" eingegangen wird.

Die Einordnung der gemessenen Daten zu den jeweiligen Fahrsituationen erfolgte anhand der fahrzeugspezifischen Größen (vgl. Fig.4, "Fahrsituationserkennung"). Der Fahrsituation "Kurvenfahrt" wurden die Daten zugeordnet, die zu einem Zeitpunkt erfasst wurden, zu dem mittels der Lasersensoren ein Rollwinkel im Bereich -35° bis +35° sowie mittels der Raddrehzahlsensoren eine Geschwindigkeit von über 5 km/h erfasst wurde. Es ergab sich, dass während der 20-minütigen Testfahrt insgesamt 70 Kurvenfahrten stattgefunden hatten. Die ermittelten Kurvenfahrten wurden dabei zunächst mit den Eingabegrößen plausibilisiert, um zu ermitteln, ob die Fahrsituation innerhalb gewisser Grenzen eine Reaktion auf die Eingabegrößen darstellt oder ob es sich um eine kritische Situation handelt (vgl. fig.4, "Fahrsituationsbewertung 1"). Im Falle einer kritischen Situation wäre bereits an dieser Stelle ein aktives oder passives Sicherheitssystem ausgelöst und/oder ein Warnzeichen an den Fahrer abgegeben worden.

Die während der so definierten Kurvenfahrten erfassten fahrerspezifischen Größen wurden dann hinsichtlich des Fahrstils und der Kritikalität untersucht. Dazu wurden die mittels der Drucksensormatte aufgezeichneten Gewichtsverteilungen mit den drei Fahrstilen "Legen", "Drücken" und "Hanging-off" gehörenden Gewichtsverteilungsmustern verglichen. Die Gewichtsverteilungsmuster sind dabei formatgleich zu den gemessenen Daten, jedoch auf die typischen Merkmale der jeweiligen Fahrstile reduziert.

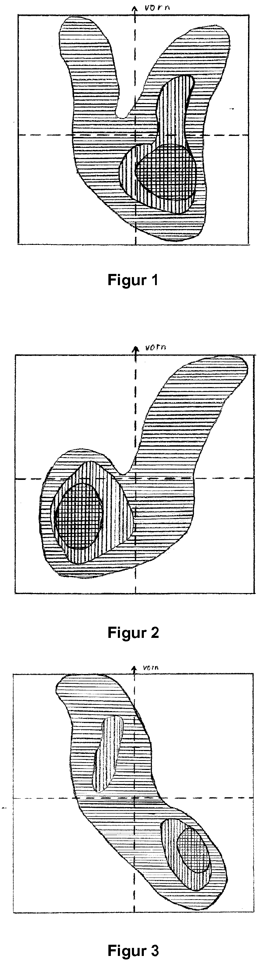

Dazu wurden die mittels der Drucksensormatte erfassten Daten in vier 16 x 16 Sensoren umfassende Quadranten unterteilt. Je nachdem, in welchen Quadranten die Maxima der Gewichtsverteilungen fielen und anhand eines Vergleichs der in den einzelnen Quadranten integrierten Gesamtdrücke, wurden die erfassten Gewichtsverteilungen den einzelnen Fahrstilen zugeordnet. Die Gewichtsverteilungsmuster der einzelnen Fahrstile sind in den Fig.1 - 3 für eine Rechtskurve schematisch dargestellt.

Die in Fig.1 gezeigte schematische Darstellung des Gewichtsverteilungsmusters für den Fahrstil "Legen" ist dabei durch die im Vergleich zu den anderen Fahrstilen größte Gesamtauflagefläche, durch ein Druckmaximum im vierten Quadranten sowie durch eine gleichmäßige Druckverteilung in allen vier Quadranten charakterisiert.

Die in Fig.2 gezeigte schematische Darstellung des Gewichtsverteilungsmusters für den Fahrstil "Drücken" ist dabei durch die im Vergleich zu den anderen Fahrstilen durch ein Druckmaximum im dritten Quadranten sowie eine ungleichmäßige Druckverteilung mit einem Druckminimum im 2. Quadranten charakterisiert.

Die in Fig.3 gezeigte schematische Darstellung des Gewichtsverteilungsmusters für den Fahrstil "Hanging-off" ist dabei durch die im Vergleich zu den anderen Fahrstilen kleinste Gesamtauflagefläche, durch ein Druckmaximum im vierten Quadranten sowie durch ein ungleichmäßige, maßgeblich auf den ersten und dritten Quadranten beschränkte Druckverteilung charakterisiert.

Die Auswertung der Gewichtsverteilungen ergab, dass der Fahrer während 83% der Kurvenfahrten den Fahrstil "Hanging-off", während 13% der Kurvenfahrten den Fahrstil "Drücken" und in 4% der Kurvenfahrten den Fahrstil "Legen" verwendete. Somit wurde zunächst anhand der fahrerspezifischen Größen allein der Fahrstil des Fahrers innerhalb der Kurvenfahrten erkannt (vgl. Fig.4, "Fahrstilerkennung 1"). Diese Daten wurden anschließend mit bereits in der Vergangenheit in der Fahrsituation "Kurvenfahrt" abgegebenen fahrerspezifischen Daten, also dem für diese Fahrsituation typischen Fahrstil des Fahrers, verglichen. Anhand der Abweichung des aktuellen Verhaltens vom vergangenen Verhalten des Fahrers wurde unter Einbeziehung der Eingabegrößen bestimmt, ob es sich um eine kritische Fahrsituation handeln könnte (vgl. Fig.4, "Fahrsituationsbewertung 2"). Anhand eines Schlüssels wurde aus der prozentualen Verteilung der drei Fahrstile in den Kurvenfahrten für den Fahrer ein Scorewert von 8,2 von möglichen 10 Punkten und somit dessen Fahrertyp ermittelt. In diesem Fall handelte es sich um einen versierten Fahrer, bestimmt (vgl. Fig. 4, "Bestimmung des Fahrertyps"). Anhand des Fahrertyps wird die bereits zuvor bestimmte Abweichung des aktuellen von dem typischen Fahrstils des Fahrers bewertet, wobei ein erfahrener oder versierter Fahrer mit ungewohnten Situationen bzw. größeren Abweichungen besser umgehen kann, als ein unerfahrener Fahrer (vgl. Fig.4 "Fahrsituationsbewertung 3"). Anhand dieses gewichteten Vergleichs des aktuellen mit dem typischen Fahrstil des Fahrers in der definierten Fahrsituation und unter Einbeziehung der Eingabegrößen wird anschließend bestimmt, ob eine kritische Situation vorliegt. Ist dies der Fall, wird ein aktives oder passives Sicherheitssystem aktiviert und/oder ein Warnhinweis an den Fahrer ausgegeben.

In die Bewertung der Kritikalität der Fahrsituation "Kurvenfahrt" gingen weiterhin fahrerspezifische Daten ein, die eine Stresssituation des Fahrers indizieren. Im vorliegenden Beispiel ergab die Auswertung der Fahrt, dass in 3 Fällen einer Kurvenfahrt mit dem Fahrstil "Hanging-off" die Hinterradbremse betätigt und die Gasgriffstellung reduziert wurde. In jedem dieser 3 Fälle kam es zu einem plötzlichen Anstieg der Herzfrequenz des Fahrers von durchschnittlich 95 Hz auf durchschnittlich 125 Hz. Nachdem der Fahrer die Kurven durchfahren hatte, fiel die Herzfrequenz wieder auf das durchschnittliche Niveau von 95 Hz. Diese kurzzeitige Erhöhung der Herzfrequenz deutet auf eine Stresssituation für den Fahrer hin, was durch eine nachträgliche Befragung des Fahrers bestätigt wurde. Diese Information kann einer Sicherheitsvorrichtung für Balancefahrzeuge zusätzlich als Ausgangswert übertragen werden, um einer kritischen Situation durch Information des Fahrers oder einen aktiven Eingriff entgegenzuwirken.

**Patentansprüche**

1. Verfahren zur Erfassung von Daten für eine Sicherheitsvorrichtung für ein Balancefahrzeug, wobei

   a) mittels mindestens zweier Sensoren $S_1^i$ bis $S_n^i$

   - fahrerspezifische Daten erfasst werden, wobei als fahrerspezifische Daten Steuersignale des Fahrers erfasst werden, wobei die Steuersignale solche sind, die nicht an Eingabemittel des Balancefahrzeugs abgegeben werden, wobei als Steuersignale die Gewichtsverlagerung des Fahrers erfasst wird, wobei die Sensoren als Drucksensoren ausgebildet sind, wobei

      (i) - zumindest zwei Drucksensoren in die Sitzbank des Balancefahrzeuges integriert oder auf dieser angebracht sind oder
      (ii) - Drucksensoren an den Seiten des Balancefahrzeugs an den Anpressflächen der Innenschenkel des Fahrers, auf den Fußrasten, an den Handgriffen oder im Auflagebereich des Oberkörpers des Fahrers bei Hochgeschwindigkeitsfahrten positioniert sind,

   b) mittels mindestens eines weiteren Sensors $S_1^j$ bis $S_n^j$ fahrzeugspezifische Daten die einen Einfluss auf das Fahrverhalten desselben haben, oder das Fahrverhalten des Balancefahrzeuges selbst charakterisieren erfasst werden,

c) die an Eingabemitteln des Balancefahrzeuges abgegebenen Steuersignale Stellung des Gasgriffes, Betätigung der Bremsen und Kupplung sowie Gangwahl, und Lenkwinkel erfasst werden

d) die unter a), b) und c) erfassten Daten an eine Datenspeicher- und Steuereinrichtung übermittelt und von dieser gespeichert werden,

e) aus den unter a) und b) erfassten Daten statische und/oder dynamische fahrer- und fahrzeugspezifische Größen ermittelt werden,

f) anhand der Werte, und/oder der zeitlichen Abfolge zumindest eines als Erkennungsparameter dienenden Teils von fahrzeugspezifischen Größen, die Fahrsituationen während der Fahrt erkannt werden, wobei Fahrsituationen vorab definierte Bewegungszustände des Balancefahrzeugs im Raum zu einem bestimmten Zeitpunkt sind,

g) anhand der Werte und/oder der zeitlichen Abfolge zumindest eines im vorab definierten als Bewertungsparameter dienenden Teils von fahrzeug- und fahrerspezifischen Größen und Eingabegrößen als den vom Fahrer an die Eingabemittel des Balancerades abgegebenen Steuersignale, Fahrsituationen wie folgt charakterisiert werden:

- wenn kein Zusammenhang zwischen Fahrsituation und Eingabegrößen des Fahrers festgestellt wird, erfolgt Charakterisierung der Situation als kritisch,

- wenn eine Fahrsituation vorliegt, die eine direkte Reaktion des Fahrzeugs auf Eingabegrößen des Fahrers ist, dann erfolgt die Bewertung der Fahrsituation anhand des Fahrstils des Fahrers, wobei der aktuelle Fahrstil aus den in der erkannten Fahrsituation erfassten Bewertungsparametern bestimmt und mit einem in der Vergangenheit in der gleichen Fahrsituation bestimmten typischen Fahrstil verglichen wird und, wobei aus einer Abweichung des aktuellen vom typischen Fahrstil des Fahrers auf das Vorliegen einer kritischen Situation geschlossen wird,

h) beim Vorliegen einer kritischen Situation eine Sicherheitsvorrichtung ausgelöst wird oder die Abgabe von Informationen über die Kritikalität an den Fahrer bewirkt wird.

2. Verfahren nach einem der vorhergehenden Ansprüche, **dadurch gekennzeichnet, dass** in Schritt a) (i) weiterhin die vom Fahrer auf die Seite oder die Fußrasten des Balancefahrzeugs applizierte Drücke erfasst werden, wobei die Sensoren als Drucksensoren ausgebildet sind.

3. Verfahren nach einem der vorhergehenden Ansprüche, **dadurch gekennzeichnet, dass** in Schritt a) weiterhin die Position des Fahrers auf dem Balancerad mittels optischer Sensoren erfasst wird.

4. Verfahren nach einem der vorhergehenden Ansprüche, **dadurch gekennzeichnet, dass** durch Einordnung der Bewertungsparameter einer Fahrsituation in vorab definierte Wertebereiche der Fahrertyp eines Fahrers bestimmt wird.

5. Verfahren nach einem der vorhergehenden Ansprüche, **dadurch gekennzeichnet, dass** die Abweichung des aktuellen von dem typischen Fahrstil in Abhängigkeit des Fahrertyps bewertet wird.

6. Verfahren nach einem der vorhergehenden Ansprüche, **dadurch gekennzeichnet, dass** die Einschätzung der Kritikalität einer Situation unter Einbeziehung des Fahrertyps erfolgt.

**Claims**

1. Method for detecting data for a safety device for a balance vehicle, wherein

   a) by means of at least two sensors $S_1^i$ to $S_n^i$

   - driver-specific data are detected, wherein control signals of the driver are detected as driver-specific data, wherein the control signals are those that are not delivered to input means of the balance vehicle, wherein the weight transfer of the driver is detected as control signals, wherein the sensors are designed as pressure sensors, wherein

   (i) - at least two pressure sensors are integrated in the seat of the balance vehicle or are mounted on said seat, or
   (ii) - pressure sensors are positioned on the sides of the balance vehicle on the contact surfaces of the inner thighs of the driver, on the footrests, on the handles or in the support region of the upper body of the driver during high-speed journeys,

   b) by means of at least one further sensor $S_1^j$

   to $S_n^j$, vehicle-specific data are detected which have an influence on the handling of the same vehicle or which characterise the handling of the balance vehicle itself,

   c) the control signals delivered to input means of the balance vehicle - position of the throttle grip, actuation of the brakes and clutch as well as gear selection, and steering angle - are detected,

d) the data detected under a), b) and c) are transmitted to a data storage and control apparatus and stored by said apparatus,

e) static and/or dynamic driver- and vehicle-specific variables are determined from the data detected under a) and b),

f) the driving situations are recognised during the journey on the basis of the values and/or the temporal sequence of at least some vehicle-specific variables serving as recognition parameters, wherein driving situations are predefined states of motion of the balance vehicle in space at a specific instant,

g) on the basis of the values and/or the temporal sequence of at least some predefined vehicle- and driver-specific variables and input variables serving as evaluation parameters, as the control signals delivered by the driver to the input means of the balance bicycle, driving situations are characterised as follows:

    - if no correlation is found between the driving situation and input variables of the driver the situation is characterised as critical,

    - if a driving situation occurs that is a direct reaction of the vehicle to input variables of the driver, then the driving situation is evaluated on the basis of the driving style of the driver, wherein the current driving style is determined from the evaluation parameters detected in the recognised driving situation and compared with a typical driving style previously determined in the same driving situation, and wherein the occurrence of a critical situation is inferred from a deviation of the current driving style from the typical driving style of the driver,

    h) should a critical situation occur, a safety device is triggered or information about the criticality is delivered to the driver.

2. Method according to any of the preceding claims, **characterised in that** in step a) (i) the pressures applied by the driver on the side or the footrests of the balance vehicle are furthermore detected, the sensors being designed as pressure sensors.

3. Method according to any of the preceding claims, **characterised in that** in step a) the position of the driver on the balance bicycle is furthermore detected by means of optical sensors.

4. Method according to any of the preceding claims, **characterised in that** the driver type of a driver is determined by classifying the evaluation parameters of a driving situation into predefined value ranges.

5. Method according to any of the preceding claims, **characterised in that** the deviation of the current driving style from the typical driving style is evaluated on the basis of the driver type.

6. Method according to any of the preceding claims, **characterised in that** the criticality of a situation is assessed taking into account the driver type.

## Revendications

1. Procédé destiné à l'enregistrement de données pour un dispositif de sécurité d'un véhicule à deux roues, dans lequel,

    a) au moyen d'au moins deux capteurs $S_1^i$ à $S_n^i$,

        - des données spécifiques au conducteur sont enregistrées, dans lequel des signaux de commande du conducteur sont enregistrés comme données spécifiques au conducteur, dans lequel les signaux de commande sont ceux qui ne sont pas délivrés aux moyens d'entrée du véhicule à deux roues, dans lequel le rééquilibrage du conducteur est enregistré comme signaux de commande, dans lequel les capteurs sont conçus sous la forme de capteurs de pression, dans lequel

        i) - au moins deux capteurs de pression sont intégrés à la selle du véhicule à deux roues ou montés sur celle-ci ou
        ii) - des capteurs de pression sont placés sur les côtés du véhicule à deux roues sur les surfaces de pression des entrecuisses du conducteur, sur les repose-pieds, sur les poignées ou dans la zone d'appui du torse du conducteur pour les déplacements à grande vitesse,

    b) au moyen d'au moins un autre capteur $S_1^j$ à $S_n^j$, des données spécifiques au véhicule, qui ont une influence sur le comportement de celui-ci ou qui caractérisent le comportement du véhicule à deux roues lui-même, sont enregistrées,

    c) l'actionnement des freins et de l'embrayage ainsi que la sélection de la vitesse et l'angle de braquage sont enregistrés comme signaux de commande délivrés aux moyens d'entrée du véhicule à deux roues,

d) les données enregistrées aux étapes a), b) et c) sont transmises à un dispositif de stockage de données et de commande, et stockées par celui-ci,

e) les variables statiques et/ou dynamiques spécifiques au conducteur et au véhicule sont déterminées à partir des données enregistrées aux étapes a) et b),

f) à partir des valeurs et/ou de la séquence temporelle d'au moins une partie de variables spécifiques au véhicule servant de paramètres de reconnaissance, les situations de conduite sont reconnues pendant la conduite, les situations de conduite étant des états de mouvement prédéfinis du véhicule à deux roues dans l'espace à un moment précis,

g) à partir des valeurs et/ou de la séquence temporelle d'au moins une partie de variables spécifiques au véhicule et au conducteur et de variables d'entrée servant de paramètres d'évaluation comme signaux de commande délivrés aux moyens d'entrée par le conducteur de la bicyclette, les situations de conduite sont caractérisées comme suit :

  - si aucune corrélation n'est établie entre la situation de conduite et les variables d'entrée du conducteur, la situation est considérée comme critique,
  - si une situation de conduite se produit en tant que réaction directe du véhicule aux variables d'entrée du conducteur, l'évaluation de la situation de conduite est basée sur le style de conduite du conducteur, le style de conduite actuel étant déterminé à partir des paramètres d'évaluation enregistrés dans la situation de conduite reconnue et comparé à un style de conduite typique antérieur dans la même situation de conduite, la présence d'une situation critique étant déterminée par un écart entre le style de conduite actuel et le style de conduite typique du conducteur,

h) en présence d'une situation critique, un dispositif de sécurité est déclenché ou des informations sur la criticité sont transmises au conducteur.

2. Procédé selon l'une des revendications précédentes, **caractérisé en ce qu'**à l'étape a) i), les pressions appliquées par le conducteur sur le côté ou sur les repose-pieds du véhicule à deux roues sont en outre enregistrées, les capteurs étant conçus sous la forme de capteurs de pression.

3. Procédé selon l'une des revendications précédentes, **caractérisé en ce qu'**à l'étape a), la position du conducteur sur la bicyclette est en outre enregistrée au moyen de capteurs optiques.

4. Procédé selon l'une des revendications précédentes, **caractérisé en ce que** le type de conduite d'un conducteur est déterminé en classant les paramètres d'évaluation d'une situation de conduite dans des plages de valeurs prédéfinies.

5. Procédé selon l'une des revendications précédentes, **caractérisé en ce que** l'écart entre le style de conduite actuel et le style de conduite typique est évalué en fonction du type de conducteur.

6. Procédé selon l'une des revendications précédentes, **caractérisé en ce que** l'évaluation de la criticité d'une situation s'effectue en tenant compte du type de conducteur.

Figur 1

Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008047727 A1
- WO 2008046744 A1
- EP 2821978 A1
- US 7072753 B2

- US 2004035630 A1
- EP 2026287 A2
- US 20040035630 A1
- DE 102005028995 A2